# EUROPEAN PATENT SPECIFICATION

(11) **EP 3 963 979 B1**
(45) Date of publication and mention of the grant of the patent: **25.02.2026**
(21) Application number: 19927028.1
(22) Date of filing: 30.04.2019
(51) Int. Cl.: H04W 88/08, H04W 74/08

(54) **CHANNEL DETECTION BEFORE TRANSMISSION**
KANALDETEKTION VOR DER ÜBERTRAGUNG
DÉTECTION DE CANAL AVANT TRANSMISSION

(43) Date of publication of application: 09.03.2022
(73) Proprietor: Nokia Technologies Oy, 02610 Espoo (FI)
(72) Inventor: DRABEK, Jacek, 30-348 Krakow (PL); DE BENEDITTIS, Rossella, 89073 Ulm (DE); WANG, Gang, Beijing 100102 (CN)
(74) Representative: Nokia EPO representatives
(86) International application number: PCT/CN2019/085351
(87) International publication number: WO 2020/220335

(56) References cited:
- EP-A1- 3 133 888
- EP-A1- 3 474 623
- WO-A1-2017/128045
- WO-A1-2017/193268
- WO-A1-2017/202300
- WO-A1-2018/010066
- WO-A1-2018/064525
- WO-A1-2019/027711
- CN-A- 107 231 688
- CN-A- 107 231 688
- CN-A- 108 650 037
- US-A1- 2013 294 289
- US-A1- 2016 066 195
- US-A1- 2018 092 043
- US-A1- 2018 255 576
- US-A1- 2018 309 510
- US-A1- 2019 124 688

## Description

### FIELD

Examples of the present disclosure generally relate to the field of communications, and in particular, to a device, method, apparatus and computer readable storage medium of channel detection before transmission.

### BACKGROUND

Extensible Radio Access Network (xRAN) is an industry standard produced by a consortium of vendors and operators to allow radio units (RUs) and central units (CUs) from different vendors to interoperate among these units. The RU and CU can be deployed within a network device such as an evolved NodeB (eNB) or a New Radio (NR) NodeB (gNB). xRAN covers different technologies such as Long Term Evolution (LTE), NR and Licensed Assisted Access (LAA).

In a LAA system, Listen Before Talk (LBT) and Dynamic Channel Selection (DCS) are the key features. The LBT is mandatory for a commercial LAA system. The LBT requires that a network device or base station listens to and assesses a channel before using the channel for transmission. Typically, the LAA system may coexist with Wireless Fidelity (WiFi) stations in the same bands on which Time Division Duplex (TDD) operation is used. Accordingly, on the channels in these bands, each base station needs to operate in a receive (RX) or listen mode at first to assess whether a channel is clear (or free) or busy (or occupied) before using the channel for transmission.

One simple assessing approach is to measure power of a channel of interest. If the measured power is below a pre-defined threshold, the channel is considered to be clear or free; otherwise, it is considered to be busy or occupied by another station or system. This procedure is referred to as Clear Channel Assessment (CCA). When the channel of interest is busy, the base station cannot transmit a signal. The base station has to wait for a time interval and then performs the CCA again. When the channel is clear, the base station can transmit signals on the channel but only for a limited time interval (such as 8ms or 10ms) after which the base station has to assess the channels again. Thus, the transmission from an LAA cell can be seen as a burst.

The DCS is a very important feature for an LAA system to get better performance in term of throughput and overall system performance. Accordingly, the DCS is mostly required in the commercial LAA system. The DCS requires that the base station assesses or selects the best channel from a list of candidate channels. With the DCS, the base station autonomously determines the best operational frequencies for the configured LAA cells or unlicensed cells and chooses the least interfered channels out of a pre-configured list of unlicensed channels. An example list of unlicensed channels may comprise a sub-set or all of WiFi channels in the U-NII-1, U-NII-2 and/or U-NII-3 sub-band of 5GHz unlicensed spectrum in frequency band 46. The list of unlicensed channels is operator configurable per RU. An example RU may be referred to as a Low Power Remote Radio Head (LP-RRH). One LP-RRH unit can serve a plurality of LAA cells.

For example, the base station may first operate on a certain channel (for example, channel #2), which may be designated by default or selected randomly. During the LBT and CCA operations, the base station may also check load status on each WiFi channel on which the configured unlicensed cells can operate by measuring the received power level from these channels. By long term statistics, once the base station finds that the "load" of an unused channel (for example, channel #7) is lighter than the "load" of channel #2 which is currently used by a configured unlicensed cell (for example, CellA), then the base station can change the operational channel of CellA from channel #2 to channel #7 to increase the probability to find the channel free and, as a consequence, to use the channel for transmission. However, such DCS operation may inevitably introduce service degradation. WO2018010066A1 discloses a method for facilitating clear channel assessment and radio unit. WO2017128045A1 discloses a method for data transmission at a communications device operable in an unlicensed spectrum. US 2018/309510A1 discloses methods and nodes of a distributed base station system for improved downlink transmission. WO2019027711A1 discloses method and apparatus for flexible fronthaul physical layer split for cloud radio access networks.

### SUMMARY

Technical features of the invention are depicted in the appended claims. In general, examples of the present disclosure provide a device, method, apparatus and computer readable storage medium of channel detection before transmission.

In a first example, a device is provided which comprises at least one processor and at least one memory including computer program code. The at least one memory and the computer program code are configured to, with the at least one processor, cause the device to determine that a signal is to be transmitted on a first channel of a plurality of supported channels. The device is further caused to in response to the determination, perform channel detection for the plurality of supported channels to transmit the signal.

In a second example, a method is provided. In the method, it is determined that a signal is to be transmitted on a first channel of a plurality of supported channels. In response to the determination, channel detection is performed for the plurality of supported channels to transmit the signal.

In a third example, there is provided an apparatus comprising means for performing the method according to the second aspect.

In a fourth example, there is provided a computer readable storage medium comprising program instructions stored thereon. The instructions, when executed by a processor of a device, cause the device to perform the method according to the second aspect.

It is to be understood that the summary section is not intended to identify key or essential features of examples of the present disclosure, nor is it intended to be used to limit the scope of the present disclosure. Other features of the present disclosure will become easily comprehensible through the following description.

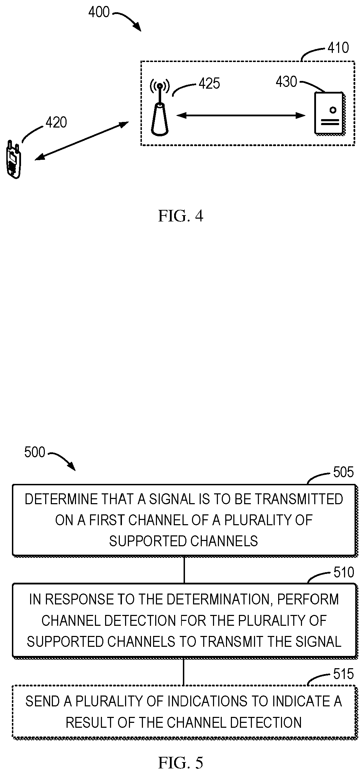

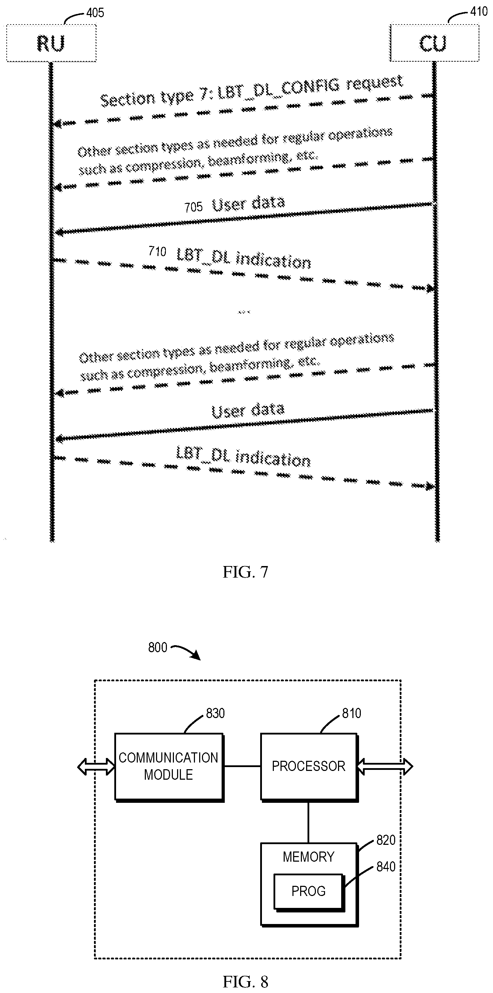

In the following, the invention is best understood in view of figures 5 and 7. The remaining embodiments, aspects and examples disclosed below are included for illustrative purposes and for facilitating the understanding of the invention.

### BRIEF DESCRIPTION OF THE DRAWINGS

Some examples will now be described with reference to the accompanying drawings, where:
FIG. 1 illustrates example candidate channels for an LAA cell;
FIG. 2 illustrates example fronthaul function split between a CU and a RU and the respective logical interfaces in a gNB of xRAN;
FIG. 3 illustrates a conventional signaling flow between a RU and a CU for the measurement exchange;
FIG. 4 illustrates an example environment in which examples of the present disclosure can be implemented;
FIG. 5 illustrates a flowchart of an example method according to some other examples of the present disclosure;
FIG. 6 illustrates an example of a plurality of supported channels in accordance with some examples of the present disclosure;
FIG. 7 illustrates example messages exchanged between a RU and a CU in accordance with some examples of the present disclosure; and
FIG. 8 illustrates a simplified block diagram of a device that is suitable for implementing examples of the present disclosure.

Throughout the drawings, the same or similar reference numerals represent the same or similar element.

### DETAILED DESCRIPTION

Principle of the present disclosure will now be described with reference to some examples. It is to be understood that these examples are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

As used herein, the term "terminal device" or "user equipment" (UE) refers to any terminal device capable of wireless communications with each other or with the base station. The communications may involve transmitting and/or receiving wireless signals using electromagnetic signals, radio waves, infrared signals, and/or other types of signals suitable for conveying information over air. In some examples, the UE may be configured to transmit and/or receive information without direct human interaction. For example, the UE may transmit information to the network device on predetermined schedules, when triggered by an internal or external event, or in response to requests from the network side.

Examples of the UE include, but are not limited to, user equipment (UE) such as smart phones, wireless-enabled tablet computers, laptop-embedded equipment (LEE), laptop-mounted equipment (LME), wireless customer-premises equipment (CPE), sensors, metering devices, personal wearables such as watches etc., and/or vehicles that are capable of communication. For the purpose of discussion, some examples will be described with reference to UEs as examples of the terminal devices, and the terms "terminal device" and "user equipment" (UE) may be used interchangeably in the context of the present disclosure.

As used herein, the term "network device" or "base station" (BS) refers to a device via which a terminal device or UE can access the communication network. Examples of the network devices include a relay, an access point (AP), a transmission point (TRP), a node B (NodeB or NB), an evolved NodeB (eNodeB or eNB), a New Radio (NR) NodeB (gNB), a low power node such as a femto, a pico, and the like. For the purpose of discussion, some examples will be described with reference to UEs as examples of the terminal devices, and the terms "network device" and "base station" (BS) may be used interchangeably in the context of the present disclosure.

The network device may comprise a radio unit (RU) and one or more central units (CUs). As used herein, the term "radio unit" (RU) refers to a unit or node capable of the transceiver functionality of the network device for transmitting and receiving radio signals. Examples of the RU include a Remote Radio Module (RRU), a radio header (RH), a remote radio head (RRH), a Low Power Remote Radio Head (LP-RRH). Management functions of the RU may be controlled by a CU or a management system.

As used herein, the term "central unit" (CU) refers to a unit or node capable of the control or management function of a network device. The CU may also be referred to as a base band unit (BBU). One CU may support or serve one cell, and one RU may serve one or more CUs or cells.

As used herein, the term "circuitry" may refer to one or more or all of the following:
(a) hardware-only circuit implementations (such as implementations in only analog and/or digital circuitry) and
(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

As used herein, the singular forms "a", "an", and "the" are intended to include the plural forms as well, unless the context clearly indicates otherwise. The term "includes" and its variants are to be read as open terms that mean "includes, but is not limited to". The term "based on" is to be read as "based at least in part on". The term "one embodiment" and "an embodiment" are to be read as "at least one embodiment". The term "another embodiment" is to be read as "at least one other embodiment". Other definitions, explicit and implicit, may be included below.

As used herein, the terms "first", "second" and the like may be used herein to describe various elements, these elements should not be limited by these terms. These terms are only used to distinguish one element from another. For example, a first element could be referred to as a second element, and similarly, a second element could be termed a first element, without departing from the scope of examples. As used herein, the term "and/or" includes any and all combinations of one or more of the listed terms.

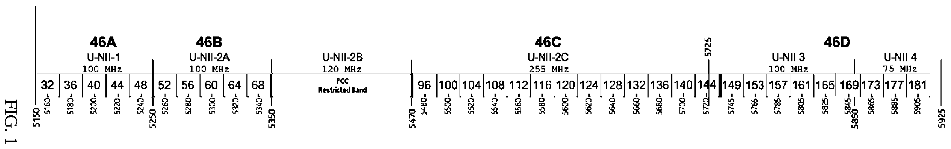

Typically, a list of candidate channels for an LAA cell may comprise a sub-set or all of WiFi channels in frequency band 46 which comprises sub-bands 46A, 46B, 46C and 46D as shown in FIG. 1. Accordingly, an LAA base station can operate in all or a sub-set of these sub-bands.

As discussed above, the DCS operation relies on the power measurements of the channels on which the LAA cells of a base station can operate and further on algorithm according which the base station decides to change the current operational channel of the LAA cells to a less loaded or interfered channel. The power measurements are typically performed in the RU of the base station, whereas the DCS algorithm resides in the CU of the base station.

During the power measurements, the RU can neither transmit signals or data to served UEs nor receive signals or data from the UEs, and therefore service degradation is introduced. The service degradation is related to the measurement duration and to how the measurement is performed. The longer and more frequent the measurement is, the higher is the degradation. Furthermore, the measurement results need to be conveyed to the CU for processing. The more is the amount of exchanged messages to trigger the measurement and to fetch the results, the wider is the consumed transport band and, therefore, the severer is the service degradation.

On the other hand, in order to achieve an efficient frequency change, the DCS operation may need enough samples of the power measurements for all the candidate WiFi channels in the fastest and simplest way as possible. The influence of the power measurements on the base station performance may be reduced in terms of offered data throughput to the served UEs. For example, time duration of transmission interruption due to the power measurements needs be limited as much as possible.

Moreover, the bandwidth required for communicating the power measured results from the RU to the CU should not be dramatically increased to reduce system overload. For example, the number and frequency bandwidth of the exchanged messages should not be too large. Moreover, the messages exchanged between the RU and the CU to set up and report the measurement results should be reliable (for example, the successful reception should be guaranteed) and predictable in time, to provide consistent and up to date measurement results to the DCS operation. For example, the power measurement samples for all the candidate channels may be measured in the RU and received in the CU at the same point in time to be comparable.

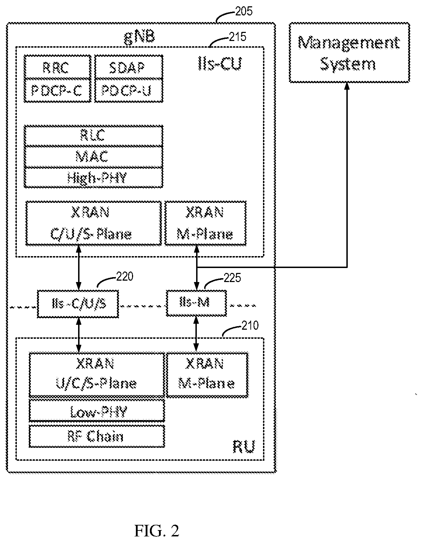

FIG. 2 shows example fronthaul function split between a CU and a RU and the respective logical interfaces in a gNB of xRAN. As shown, a gNB 205 comprises a RU 210 and a lower layer split Central Unit (lls-CU) 215. The RU 210 and the CU 215 communicate over two logical interfaces: a Control Plane (C-Plane), User Plane (U-Plane) and Service Plane (S-Plane) interface (or lls-C/U/S interface) 220 and a Management Plane (M-Plane) interface (or lls-M interface) 225. The lls-C/U/S interface 220 may be used to exchange real-time control information, such as a request of transmission, a LBT result and the like. The lls-M interface 225 may be used to exchange non-real-time management information relating to establishment and maintenance of a CU-RU link, software (Sw) download, parameter configuration, alarm reports, measurements and the like. These two logical interfaces 220 and 225 are specified in related technical specifications or documents, for example, XRAN-FH.MP.0 "xRAN Fronthaul Working Group - Management Plane Specification" and XRAN-FH.CUS.0 "xRAN Fronthaul Working Group - Control, User and Synchronization Plane Specification". In xRAN, the LAA measurements are handled over the M-Plane interface 225.

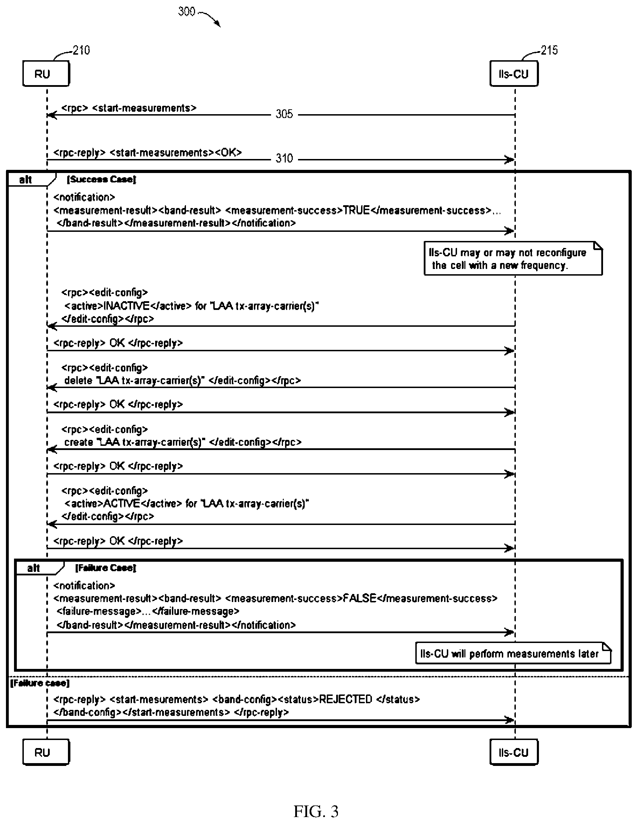

FIG. 3 shows a conventional signaling flow 300 between the RU 210 and the CU 215 for the measurement exchange.

As shown, the CU 215 sends (305) to the RU 210 a "rpc start-measurements" message to trigger activation of the measurement at the RU 210. The RU 210 performs the measurements and delivers the result of the measurements according to maximum response time. As shown, the RU 210 sends (310) a RPC response where status==ACCEPTED (positive case) or REJECTED (negative case). If the result is not ready on time, the RU 210 may send notification with "measurement-success" == FALSE and with an appropriate failure reason. For each configured band, the RU 210 indicates to the CU 205 whether the measurement was successful or not. For bands with successful measurements, the RU 210 may report the occupancy ratio and average Received Signal Strength Indicator (RSSI) for each channel. For bands with failed measurements, the RU 210 may include the reason such as TIMEOUT in the RPC response when the RU 210 is not able to complete the measurement for these specific bands.

The occupancy ratio of a given channel is defined as percentage of the busy duration (for example, when the measured signal power is larger than an energy-detection threshold) to the total measurement duration of this specific channel. The energy detection threshold may be the same as an energy detection threshold used in the LBT operation for Physical Downlink Shared Channel (PDSCH) transmission. The average RSSI of the measured channel is the measured power of this specific channel averaged over the total measurement duration per channel. This parameter may be reported in dBm and take a value from a range of 0 dBm to -128 dBm. Both the occupancy ratio and average RSSI are derived from multiple measured samples taken by the RU 210. Therefore, multiple transmission interruptions are introduced by the measurements to deliver statistically reliable results to the CU 215.

There are some drawbacks of such a conventional M-Plane solution. For example, a time interval of service interruption during the measurements may be added up with the time interval required for performing the LBT operation before a "regular" data transmission such as Discovery Reference Signal (DRS) or PDSCH transmission. Complex signaling exchange between the RU and the CU increases the system load or overhead. Moreover, huge amount of data to report the measurement results (the RSSI values and occupancy ratio) for all candidate WiFi channels in band 46 will consume the transport band between the RU and the CU. Unpredictable transfer time of the information may cause the information outdated or obsolete and may force to add a time stamp to the information, thereby adding complexity to the DCS operation and further increasing the amount of delivered information and the delay.

Examples of the present disclosure provide a fast scheme to trigger channel detection before transmission. With this scheme, if a signal is to be transmitted on one of supported channels, channel detection is activated for all the supported channels. These channels may operate in unlicensed or licensed spectrum. This scheme can be implemented at both a terminal side and a network side.

As such, the channel detection of all the supported channels may be performed each time when transmission is desired on one of the channels. Moreover, if there is no request for data transmission, there is no need for changing the operational frequencies either. In this way, the channel detection or assessment may be faster and more efficient, and therefore a delay or other performance degradation may be reduced significantly.

FIG. 4 shows an example environment 400 in which examples of the present disclosure can be implemented. The environment 400, which may be a part of a communication network, comprises a network device 410 and a terminal device 420. It is to be understood that one network device and one terminal device are shown in the environment 400 only for the purpose of illustration, without suggesting any limitation to the scope of the present disclosure. Any suitable number of network devices and terminal devices may be included in the environment 400.

The network device 410 comprises a radio unit (RU) 425 and a central unit (CU) 430. The RU 425 and the CU 430 cooperate with each other to implement the function of the network device 410. It is to be understood that one RU and one CU are shown within the network device 410 only for the purpose of illustration, without suggesting any limitation to the scope of the present disclosure. In some examples, the network device 410 may comprise a plurality of CUs served by the RU 425. Each of the CUs may serve one cell provided by the network device 410.

The terminal device 420 can communicate with the network device 410 or with another terminal device (not shown) directly or via the network device 410. The communication may follow any suitable communication standards or protocols such as Universal Mobile Telecommunications System (UMTS), long term evolution (LTE), LTE-Advanced (LTE-A), the fifth generation (5G) NR, Wireless Fidelity (Wi-Fi) and Worldwide Interoperability for Microwave Access (WiMAX) standards, and employs any suitable communication technologies, including, for example, Multiple-Input Multiple-Output (MIMO), Orthogonal Frequency Division Multiplexing (OFDM), time division multiplexing (TDM), frequency division multiplexing (FDM), code division multiplexing (CDM), Bluetooth, ZigBee, and machine type communication (MTC), enhanced mobile broadband (eMBB), massive machine type communication (mMTC), ultra-reliable low latency communication (URLLC), Carrier Aggregation (CA), Dual Connection (DC), and New Radio Unlicensed (NR-U) technologies.

Both the network device 410 and the terminal device 420 can support a plurality of channels in the unlicensed or licensed spectrum. The network device 410 and the terminal device 420 can perform channel detection for the supported channels. In various examples of the present disclosure, the channel detection for the supported channels is performed whenever a signal is to be transmitted on one of the supported channels.

FIG. 5 shows a flowchart of an example method 500 according to some examples of the present disclosure. The method 500 is implemented by a radio unit of a network device 410 or may be performed by the terminal device 420 as shown in FIG. 4.

At block 505, it is determined that a signal to be transmitted on a channel (referred to as a "first channel") of a plurality of supported channels. The signal may carry any suitable information to be transmitted. For example, in the examples where the method 500 is implemented at the network device 410, the network device 410 may determine when there is data to be transmitted on the first channel to a terminal device such as the terminal device 420.

The method 500 is implemented by the RU 425 of the network device 410. The RU 425 determines that the data is to be transmitted on the first channel upon reception of a request from the CU 430 of the network device 410 for signal transmission on the first channel. A plurality of CUs in a plurality of cells provided by the network device 410 may simultaneously request to transmit signals on a plurality of channels including the first channel. The one or more CUs will be referred to as a set of CUs, and the corresponding one or more requests will be referred to as a set of requests. Accordingly, the RU 425 determines that there is a signal to be transmitted on the first channel.

At block 510, in response to the determination at block 505, channel detection is performed for the plurality of supported channels to transmit the signal. The channel detection may involve any suitable channel state such as clear state and load state. For example, the load state may be checked for each of the supported channels. The load state may be represented by interferences such as the measured power levels. In this case, the load state may be detected by measuring the received power level on these channels.

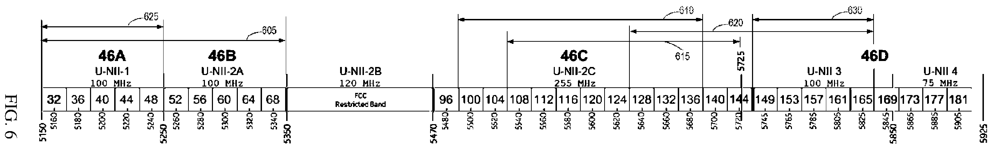

As another example of the channel detection, it may be detected whether each of the plurality of supported channels is clear or not. This detection may be performed by Clear Channel Assessment (CCA), for example. For example, in the examples where the supported channels operate on frequency band 46 as shown in FIG. 6 and comprise all the candidate WiFi channels in band 46, the RU 425 may perform or make received signal strength indicator (RSSI) measurements on all the candidate channels of band 46 (for example, in sub-bands 46A, 46B, 46C and 46D) each time the RU 425 performs the CCA for a channel in response to a request from the CU 430 for DRS or PDSCH transmission on the channel.

The plurality of supported channels may be detected in any suitable timing. In some examples, the detection of the first channel may be prior to the detection of other channels. For example, the first channel may be detected in a time period, and at least one different channel (referred to as a second channel) of the supported channels may be detected in a subsequent time period. In the examples where the channel detection is performed by the RU 425 of the network device 410, after the RU 425 receives a transmission request for the first channel from the CU, the RU 425 may first perform the CCA for the first channel in first several 25us in a measurement period predefined for the CCA, and may assess other channels (such as the second channel) during the last 25us before the requested transmission starts or fails, or the CCA is retried. The 25us channel assessment complies with a "short" Type B multi-carrier channel access procedure defined in the third generation partnership project (3GPP) specifications such as 3GPP TS 37.213.

The channel detection may depend on energy detection on the channels. The energy detection threshold applied to other channels (such as the second channel) may or may not be the same as that used for assessing the channel(s) (such as the first channel) for which there is a transmission request. For example, the DRS CCA threshold or the PDSCH CCA threshold may be reused for the detection of all the supported channels.

The channel detection for the plurality of supported channels may be performed simultaneously or in parallel. For example, if the supported channels operate on the same sub-band as sub-band 46A, 46B, 46C or 46D (or B46A, B46B, B46C or B46D) in band 46, all the candidate WiFi channels may be scanned simultaneously via one receiving (RX) chain. If the supported channels are in different sub-bands (for example, B46A and B46D), the channels may be scanned via two or more separate RX chains. For example, a main RX chain may scan an operating channel (for example, the first channel) and all candidate channels in an operating sub-band (for example, B46A) in which a signal is intended to transmit, and a separate RX chain may scan a candidate channel (for example, the second channel) in an alternative sub-band (for example, B46D) in parallel.

In some examples, one separate RX chain may be used for detect a plurality of other sub-bands (for example, B46B, B46C and B46D) than the operating sub-band (for example, B46A). These sub-bands may be scanned via the separate RX chain one by one in a round-robin mode. For example, after the separate RX chain collects an enough number of samples in one candidate sub-band (for example, B46D) including, for example, the second channel, the separate RX chain may scan a next alternate sub-band (for example, B46C) for other supported channels including a channel (referred to as a third channel) different from the first and second channels. In parallel, the main RX chain may scan the operating sub-band (for example, B46A).

Still with reference to FIG. 5, at block 515, a plurality of indications may be sent to indicate a result of the channel detection for the plurality of supported channels. These indications may be delivered by reusing an existing message which may be enhanced for carrying these indications. The indications may also be transmitted using a new message type.

In the examples where the method 500 is implemented by the terminal device 420, the terminal device 420 may send the plurality of indications to indicate the result of the channel detection to the network device 410 such that the network device 410 can determine a channel from the plurality of supported channels for signal transmission. In the case that the method 500 is implemented by the network device 410, the network device 410 may directly determine a channel from the plurality of supported channels for transmission based on the result of the channel detection. For example, the network device 410 may determine whether the signal will be transmitted on the first channel or a different channel based on the detected channel state for these supported channels. Any approach of dynamic channel selection, which is already known or to be developed in the future, may be employed by the network device 410.

As an example of the indications, each of the supported channels may have its own state bit. For example, when the CCA is used for the channel detection for all the supported channels, the result of the channel assessment for each channel may be provided in a binary form, where a value "1" indicates a success and a value "0" indicates a failure. In some examples, one or more sub-band identifications (IDs) of the sub-bands related to the supported channels may also be indicated.

Table 1 shows an example of indications for the result of the channel detection for the WiFi channels in band 46 as shown in FIG. 6.

**Table 1**

| | |
|---|---|
| *operationalSubBandId* | *Operational Unlicensed Sub Band Id* |
| | *4 bits.* |
| | *Value of 0 indicates that operationalSubBandCcaResults is invalid and should be ignored* |
| | *Value of 1 indicates unlicensed sub-band #1* |
| | *Value of 2 indicates unlicensed sub-band #2* |
| | *Value of 3 indicates unlicensed sub-band #3* |
| | *Value of 4 indicates unlicensed sub-band #4* |
| | *Value of 5 indicates unlicensed sub-band #5* |
| | *Value of 6 indicates unlicensed sub-band #6* |
| | *Value 7-15 is reserved* |
| *operationalSubBandCcaResults* | *Short channel assessment results for the operational sub band.* |
| | *Short channel assessment results are provided in binary form, where value "0" signifies channel assessment success for specific WiFi channel and value "1" signifies channel assessment fail for specific WiFi channel.* |
| | *10 bits.* |
| | *For sub-band #1:* |
| | *[bit10,..., bit1] = [ch68,ch64,ch60,ch56,ch52,ch48,ch44,ch40,ch36,ch32]* |
| | *For sub-band #2:* |
| | *[bit10,..., bit1] = [ch136,ch132,ch128,ch124,ch120,ch116,ch112,ch108,ch104,ch10 0]* |
| | *For sub-band #3:* |
| | *[bit10,..., bit1]= [ch144,ch140,ch136,ch132,ch128,ch124,ch120,ch116,ch112,ch10 8]* |
| | *For sub-band #4:* |
| | *[bit10,..., bit6]= [ch165,ch161,ch157,ch153,ch149], bit5..bit1 shall be ignored* |
| | *For sub-band #5: [bit5,..., bit1] = [ch48,ch44,ch40,ch36,ch32], bit10...bit6 shall be ignored* |
| | *For sub-band #6:* |
| | *[bit10,..., bit6] = [ch165,ch161,ch157,ch153,ch149], bit5..bit1 shall be ignored* |
| | *Each bit corresponds to the single WiFi channel from the unlicensed sub band indicated via operationalSubBandId.* |
| | *0: TransmitBurst_CcaSuccess* |
| | *1: TransmitBurst_CcaFail* |
| *alternateSubBandId* | *Alternate Unlicensed Sub Band Id* |
| | *4 bits.* |
| | *Value of 0 indicates that alternateSubBandCcaResults is invalid and should be ignored* |
| | *Value of 1 indicates unlicensed sub-band #1* |
| | *Value of 2 indicates unlicensed sub-band #2* |
| | *Value of 3 indicates unlicensed sub-band #3* |
| | *Value of 4 indicates unlicensed sub-band #4* |
| | *Value of 5 indicates unlicensed sub-band #5* |
| | *Value of 6 indicates unlicensed sub-band #6* |
| | *Value 7-15 is reserved* |
| *alternateSubBandCcaResults* | *Short channel assessment results for the alternate sub band.* |
| | *Short channel assessment results are provided in binary form, where value "0" signifies channel assessment success for specific WiFi channel and value "1" signifies channel assessment fail for specific WiFi channel.* |
| | *10 bits.* |
| | *For sub-band #1:* |
| | *[bit10,..., bit1] = [ch68,ch64,ch60,ch56,ch52,ch48,ch44,ch40,ch36,ch32]* |
| | *For sub-band #2:* |
| | *[bit10,..., bit1] = [ch136,ch132,ch128,ch124,ch120,ch116,ch112,ch108,ch104,ch10* 0] |
| | *For sub-band #3:* |
| | *[bit10,..., bit1]= [ch144,ch140,ch136,ch132,ch128,ch124,ch120,ch116,ch112,ch10 8]* |
| | *For sub-band #4:* |
| | *[bit10,..., bit6]= [ch165,ch161,ch157,ch153,ch149], bit5..bit1 shall be ignored* |
| | *For sub-band #5:* |
| | *[bit5,..., bit1] = [ch48,ch44,ch40,ch36,ch32], bit10...bit6 shall be ignored* |
| | *For sub-band #6:* |
| | *[bit10,..., bit6] = [ch165,ch161,ch157,ch153,ch149], bit5..bit1 shall be ignored* |
| | *Each bit corresponds to the single WiFi channel from the unlicensed sub band indicated via operationalSubBandId.* |
| | *0: TransmitBurst_CcaSuccess* |
| | *1: TransmitBurst_CcaFail* |

As shown in FIG. 6, band 46 comprises six sub-bands 605 to 630, referred to as sub-band #1 to sub-band #6, respectively. In Table 1, a field *"operationalSubBandId'* is used to indicate the sub-band ID of the operational sub-band, and a field *"operationalSubBandCcaResults"* is used to indicate the CCA results of the individual channels in the operational sub-band. A field "*alternateSubBandId*" is used to indicate the sub-band ID of an alternate sub-band, and a field *"operationalSubBandCcaResults"* is used to indicate the CCA results of the individual channels in the alternate sub-band.

In some examples, all the results of the supported channels may be provided within the same message to provide fast feedback. For example, the message for confirming or rejecting the signal transmission or announcing a retry may be reused for the result feedback. Such fast feedback may further reduce the latency and improve the system performance and efficiency.

In the examples where the channel detection is performed by the RU 425 of the network device 410 in response to a transmission request from the CU 430 of the network device 410, the messages as the trigger and result of the LBT may be reused for activating the channel detection of the plurality of supported channels and feeding the detection result back.

FIG. 7 shows example messages exchanged between the RU 425 and the CU 430 in accordance with some examples of the present disclosure.

As shown in FIG. 7, the CU 430 sends (705) user data to the RU 425 to trigger the activation of the LAA measurements for all the supported channels at the RU 425. The triggering may be implemented by reusing LBT_DL_CONFIG_REQEST: LBT_DRS_REQ or LBT_PDSCH_REQ, which is currently used by the CU 430 for requesting data transmission.

The RU 425 enhances the LBT functionality by assessing or measuring all the supported channels such as all the candidate WiFi channels in band 46. For example, the RU 425 may execute the CCA of all the supported WiFi channels in frequency band 46, each time when there is a transmission request from an unlicensed cell in this band. By assessing or measuring other candidate WiFi channels at the same point in time when one ore more operating channels are assessed before transmission, additional transmit interruptions may be avoided for performing the power measurements.

Then, the RU 425 than reports (720) the measurement results to the CU 430 by reusing LBT_DL_INDICATION: LBT_DRS_RSP or LBT_PDSCH_RSP, which is currently used to report the result of the LBT request for data transmission. As such, the RU 425 may provide the results of this short channel assessment for all the WiFi channels (for example, both for the ones for data transmission and for the others as candidates) to the requesting CU 430, within the same message(s) by which the RU 425 confirms or rejects the transmission request from the CU 430 or the RU 425 announces a retry. In this way, the RU 425 may pass the power measurement samples for all the scanned channels to the CU 430 in a fast and efficient way.

If there are a plurality of CUs from a plurality of cells requesting to transmit signals at the same time, the RU 425 may include the detection or scanning result only in the message to one of the CUs such as a "master" CU of a "Cj" cell (the cell which asked for the data transmission). If there is no "Cj" cell, that is all the cells asked for DRS transmission, the RU 425 may select, from the set of CUs, a CU to which the scanning result will be sent. The selection of the CU may be random or based on a predefined rule.

Accordingly, the CU 430 may collect the measurement results from the RU 425. For example, the CU 430 may collect the "binary" measurement results (passed or failed) of all the supported channels from the RU 425. When a statistically sufficient number of samples are collected, the CU 430 may decide whether a frequency change is required.

Such power measurements at the RU 425 and the delivery of the power measurement results from the RU 425 to the CU 430 are fast and reliable, without degradation for the end user service. The system throughput and performance may be improved while better DCS performance may be achieved and no DCS impact may be imposed on the LBT operation. In this way, the LAA measurements may be handled over the C-Plane, by exploiting the C-Plane messages which are already defined in the xRAN specifications to support the "regular" data transmission. In addition, by reusing the messages or protocol as currently used for data transmission, no additional processing load will be added to the network device 410 in addition to benefits of the reliability of the C-Plane messages.

In some examples, the method 500 described above with reference to FIGS. 4-7 may be performed by an apparatus comprising means for performing the respective steps of the method 500. The means may be implemented in any suitable form. For example, the means may be implemented in a circuitry or software module.

FIG. 8 is a simplified block diagram of a device 800 that is suitable for implementing examples of the present disclosure. The device 800 can be implemented at or as a part of the network device 410 or the terminal device 420 as shown in FIG. 4.

As shown, the device 800 includes a processor 810, a memory 820 coupled to the processor 810, a communication module 830 coupled to the processor 810, and a communication interface (not shown) coupled to the communication module 830. The memory 820 stores at least a program 840. The communication module 830 is for bidirectional communications, for example, via multiple antennas. The communication interface may represent any interface that is necessary for communication.

The program 840 is assumed to include program instructions that, when executed by the associated processor 810, enable the device 800 to operate in accordance with the examples of the present disclosure, as discussed herein with reference to FIGS. 4-7. The examples herein may be implemented by computer software executable by the processor 810 of the device 800, or by hardware, or by a combination of software and hardware. The processor 810 may be configured to implement various examples of the present disclosure.

The memory 820 may be of any type suitable to the local technical network and may be implemented using any suitable data storage technology, such as a non-transitory computer readable storage medium, semiconductor based memory devices, magnetic memory devices and systems, optical memory devices and systems, fixed memory and removable memory, as non-limiting examples. While only one memory 820 is shown in the device 800, there may be several physically distinct memory modules in the device 800. The processor 810 may be of any type suitable to the local technical network, and may include one or more of general purpose computers, special purpose computers, microprocessors, digital signal processors (DSPs) and processors based on multicore processor architecture, as non-limiting examples. The device 800 may have multiple processors, such as an application specific integrated circuit chip that is slaved in time to a clock which synchronizes the main processor.

The processor 810 and the communication module 830 may cooperate to implement the method 500 as described above with reference to FIGS. 4-7. All operations and features as described above with reference to FIGS. 4-7 are likewise applicable to the device 800 and have similar effects. For the purpose of simplification, the details will be omitted.

Generally, various examples of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of examples of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 500 as described above with reference to FIGS. 4-7. Generally, program modules include routines, programs, libraries, objects, classes, components, data structures, or the like that perform particular tasks or implement particular abstract data types. The functionality of the program modules may be combined or split between program modules as desired in various examples. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, a computer readable medium and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), Digital Versatile Disc (DVD), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular examples. Certain features that are described in the context of separate examples may also be implemented in combination in a single embodiment. Conversely, various features that are described in the context of a single embodiment may also be implemented in multiple examples separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

Various examples of the techniques have been described. In addition to or as an alternative to the above, the following examples are described. The features described in any of the following examples may be utilized with any of the other examples described herein.

In some examples, a device comprises: at least one processor; and at least one memory including computer program code; the at least one memory and the computer program code configured to, with the at least one processor, cause the device to: determine that a signal is to be transmitted on a first channel of a plurality of supported channels; and in response to the determination, perform channel detection for the plurality of supported channels to transmit the signal.

In some examples, the device is further caused to: send a plurality of indications to indicate a result of the channel detection.

In some examples, the device comprises a radio unit of a network device, and the radio unit is further caused to: receive a set of requests from a set of control units of the network device for signal transmission on a set of channels from the plurality of supported channels, the set of channels including the first channel; and in response to the set of requests from the set of control units, determining that the signal is to be transmitted on the first channel.

In some examples, the radio unit is caused to send the plurality of indications by: sending the plurality of indications to a control unit from the set of control units.

In some examples, a request in the set of requests is received by the radio unit in a LBT_DL_CONFIG_REQUEST message, and the result is sent by the radio unit in a LBT_DL_INDICATION message.

In some examples, the device is caused to perform the channel detection by: detecting whether each of the plurality of supported channels is clear.

In some examples, the device is caused to perform the channel detection by: detecting the first channel in a first time period; and detecting at least a different second channel of the plurality of supported channels in a subsequent second time period.

In some examples, the plurality of supported channels operates on a sub-band, and the device is caused to perform the channel detection by: detecting the plurality of supported channels via a receiving chain.

In some examples, the plurality of supported channels operates on a plurality of sub-bands and the first channel operates on a first sub-band of the plurality of sub-bands, and the device is caused to perform the channel detection by: detecting the first channel via a receiving chain; and detecting at least a second channel of the plurality of supported channels operating on a different second sub-band of the plurality of sub-bands via a separate receiving chain.

In some examples, the device is caused to detect at least the second channel by: detecting the second channel and a third channel of the plurality of supported channels operating on a third sub-band of the plurality of sub-bands via the separate receiving chain by scanning the second and third sub-bands in a round-robin mode, the third sub-band being different from the first and second sub-bands.

In some examples, the device is further caused to: determine, based on the channel detection, a channel from the plurality of supported channels for transmitting the signal.

In some examples, the plurality of supported channels operates in unlicensed spectrum.

In some aspects, a method comprises: determining that a signal is to be transmitted on a first channel of a plurality of supported channels; and in response to the determination, performing channel detection for the plurality of supported channels to transmit the signal.

In some examples, the method further comprises: sending a plurality of indications to indicate a result of the channel detection.

In some examples, the method is implemented by a radio unit of a network device, and the method further comprises: receiving, by the radio unit, a set of requests from a set of control units of the network device for signal transmission on a set of channels from the plurality of supported channels, the set of channels including the first channel; and in response to the set of requests from the set of control units, determining, by the radio unit, that the signal is to be transmitted on the first channel.

In some examples, sending the plurality of indications comprises: sending, by the radio unit, the plurality of indications to a control unit from the set of control units.

In some examples, a request in the set of requests is received by the radio unit in a LBT_DL_CONFIG_REQUEST message, and the result is sent by the radio unit in a LBT_DL_INDICATION message.

In some examples, performing the channel detection comprises: detecting whether each of the plurality of supported channels is clear.

In some examples, performing the channel detection comprises: detecting the first channel in a first time period; and detecting at least a different second channel of the plurality of supported channels in a subsequent second time period.

In some examples, the plurality of supported channels operates on a sub-band, and performing the channel detection comprises: detecting the plurality of supported channels via a receiving chain.

In some examples, the plurality of supported channels operates on a plurality of sub-bands and the first channel operates on a first sub-band of the plurality of sub-bands, and performing the channel detection comprises: detecting the first channel via a receiving chain; and detecting at least a second channel of the plurality of supported channels operating on a different second sub-band of the plurality of sub-bands via a separate receiving chain.

In some examples, detecting at least the second channel comprises: detecting the second channel and a third channel of the plurality of supported channels operating on a third sub-band of the plurality of sub-bands via the separate receiving chain by scanning the second and third sub-bands in a round-robin mode, the third sub-band being different from the first and second sub-bands.

In some examples, the method further comprises: determining, based on the channel detection, a channel from the plurality of supported channels for transmitting the signal.

In some examples, the plurality of supported channels operates in unlicensed spectrum.

In some aspects, an apparatus comprises: means for determining that a signal is to be transmitted on a first channel of a plurality of supported channels; and means for in response to the determination, performing channel detection for the plurality of supported channels to transmit the signal.

In some examples, the apparatus further comprises: means for sending a plurality of indications to indicate a result of the channel detection.

In some examples, the apparatus is implemented by a radio unit of a network device, and the apparatus further comprises: means for receiving, by the radio unit, a set of requests from a set of control units of the network device for signal transmission on a set of channels from the plurality of supported channels, the set of channels including the first channel; and means for in response to the set of requests from the set of control units, determining, by the radio unit, that the signal is to be transmitted on the first channel.

In some examples, the means for sending the plurality of indications comprises: means for sending, by the radio unit, the plurality of indications to a control unit from the set of control units.

In some examples, a request in the set of requests is received by the radio unit in a LBT_DL_CONFIG_REQUEST message, and the result is sent by the radio unit in a LBT_DL_INDICATION message.

In some examples, the means for performing the channel detection comprises: means for detecting whether each of the plurality of supported channels is clear.

In some examples, the means for performing the channel detection comprises: means for detecting the first channel in a first time period; and detecting at least a different second channel of the plurality of supported channels in a subsequent second time period.

In some examples, the plurality of supported channels operates on a sub-band, and the means for performing the channel detection comprises: means for detecting the plurality of supported channels via a receiving chain.

In some examples, the plurality of supported channels operates on a plurality of sub-bands and the first channel operates on a first sub-band of the plurality of sub-bands, and the means for performing the channel detection comprises: means for detecting the first channel via a receiving chain; and means for detecting at least a second channel of the plurality of supported channels operating on a different second sub-band of the plurality of sub-bands via a separate receiving chain.

In some examples, the means for detecting at least the second channel comprises: means for detecting the second channel and a third channel of the plurality of supported channels operating on a third sub-band of the plurality of sub-bands via the separate receiving chain by scanning the second and third sub-bands in a round-robin mode, the third sub-band being different from the first and second sub-bands.

In some examples, the apparatus further comprises: means for determining, based on the channel detection, a channel from the plurality of supported channels for transmitting the signal.

In some examples, the plurality of supported channels operates in unlicensed spectrum.

In some aspects, a computer readable storage medium comprises program instructions stored thereon, the instructions, when executed by a processor of a device, causing the device to perform the method according to some examples of the present disclosure.

## Claims

1. A device (800) comprising:
at least one processor (810); and
at least one memory (820) including computer program code (840);
the at least one memory (820) and the computer program code (840) configured to, with the at least one processor (810), cause the device (800) to:
determine (505) that a signal is to be transmitted on a first channel of a plurality of supported channels (46A, 46B, 46C, 46D); and
in response to the determination, perform (510) channel detection for the plurality of supported channels (46A, 46B, 46C, 46D) to transmit the signal;
send (515) a plurality of indications to indicate a result of the channel detection to a control unit in a set of control units of a network device;
wherein the device comprises a radio unit of the network device, and the radio unit is further caused to:
receive a set of requests from the set of control units of the network device for signal transmission on a set of channels from the plurality of supported channels, the set of channels including the first channel; and
in response to the set of requests from the set of control units, determining that the signal is to be transmitted on the first channel.

2. The device of claim 1, wherein the radio unit is caused to send the plurality of indications by:
sending the plurality of indications in a message to the control unit from the set of control units of the network device.

3. The device of claim 2, wherein the device is configured to operate in accordance with a Listen Before Talk, LBT, functionality, wherein a request in the set of requests is received by the radio unit in a LBT_DL_CONFIG_REQUEST message of the LBT functionality, and the result is sent by the radio unit in a LBT_DL_INDICATION message of the LBT functionality.

4. The device of claim 1, wherein the device is caused to perform the channel detection by:
detecting whether each of the plurality of supported channels is clear.

5. The device of claim 1, wherein the device is caused to perform the channel detection by:
detecting the first channel in a first time period; and
detecting at least a different second channel of the plurality of supported channels in a subsequent second time period.

6. The device of claim 1, wherein the plurality of supported channels operates on a sub-band, and the device is caused to perform the channel detection by:
detecting the plurality of supported channels via a receiving chain.

7. The device of claim 1, wherein the plurality of supported channels operates on a plurality of sub-bands and the first channel operates on a first sub-band of the plurality of sub-bands, and the device is caused to perform the channel detection by:
detecting the first channel via a receiving chain; and
detecting at least a second channel of the plurality of supported channels operating on a different second sub-band of the plurality of sub-bands via a separate receiving chain.

8. The device of claim 7, wherein the device is caused to detect at least the second channel by:
detecting the second channel and a third channel of the plurality of supported channels operating on a third sub-band of the plurality of sub-bands via the separate receiving chain by scanning the second and third sub-bands in a round-robin mode, the third sub-band being different from the first and second sub-bands.

9. The device of claim 1, wherein the device is further caused to:
determine, based on the channel detection, a channel from the plurality of supported channels for transmitting the signal.

10. The device of claim 1, wherein the plurality of supported channels operates in unlicensed spectrum.

11. A method (500) performed by a device (500) comprising:
determining (505) that a signal is to be transmitted on a first channel of a plurality of supported channels (46A, 46B, 46C, 46D); and
in response to the determination, performing (510) channel detection for the plurality of supported channels (46A, 46B, 46C, 46D) to transmit the signal;
sending (515) a plurality of indications to indicate a result of the channel detection to a control unit in a set of control units of a network device;
receiving a set of requests from the set of control units of the network device for signal transmission on a set of channels from the plurality of supported channels, the set of channels including the first channel; and
in response to the set of requests from the set of control units, determining that the signal is to be transmitted on the first channel, wherein the device comprises a radio unit of the network device.

12. A computer readable storage medium comprising program instructions stored thereon, the instructions, when executed by a processor of a device, causing the device to perform the method of claim 11.

## Patentansprüche

1. Vorrichtung (800), die Folgendes umfasst:
mindestens einen Prozessor (810); und
mindestens einen Speicher (820), der einen Computerprogrammcode (840) beinhaltet;
wobei der mindestens eine Speicher (820) und der Computerprogrammcode (840) dazu ausgelegt sind, die Vorrichtung (800) mit dem mindestens einen Prozessor (810) zu Folgendem zu veranlassen:
Bestimmen (505), dass ein Signal auf einem ersten Kanal einer Vielzahl von unterstützten Kanälen (46A, 46B, 46C, 46D) zu übertragen ist; und
in Reaktion auf die Bestimmung Durchführen (510) einer Kanaldetektion für die Vielzahl von unterstützten Kanälen (46A, 46B, 46C, 46D), um das Signal zu übertragen;
Senden (515) einer Vielzahl von Anzeigen, um ein Ergebnis der Kanaldetektion für eine Steuereinheit in einem Satz von Steuereinheiten einer Netzwerkvorrichtung anzuzeigen;
wobei die Vorrichtung eine Funkeinheit der Netzwerkvorrichtung umfasst und die Funkeinheit ferner zu Folgendem veranlasst wird:
Empfangen eines Satzes von Anforderungen vom Satz von Steuereinheiten der Netzwerkvorrichtung für eine Signalübertragung auf dem Satz von Kanälen der Vielzahl von unterstützten Kanälen, wobei der Satz von Kanälen den ersten Kanal beinhaltet; und
Bestimmen in Reaktion auf den Satz von Anforderungen vom Satz von Steuereinheiten, dass das Signal auf dem ersten Kanal zu übertragen ist.

2. Vorrichtung nach Anspruch 1, wobei die Funkeinheit veranlasst wird, die Vielzahl von Anzeigen durch Folgendes zu senden:
Senden der Vielzahl von Anzeigen in einer Nachricht an die Steuereinheit vom Satz von Steuereinheiten der Netzwerkvorrichtung.

3. Vorrichtung nach Anspruch 2, wobei die Vorrichtung dazu ausgelegt ist, gemäß einer Listen-before-Talk(LBT)-Funktionalität betrieben zu werden, wobei eine Anforderung im Satz von Anforderungen durch die Funkeinheit in einer LBT_DL_CONFIG-REQUEST-Nachricht der LBT-Funktionalität empfangen wird und das Ergebnis durch die Funkeinheit in einer LBT_DL-INDICATION-Nachricht der LBT-Funktionalität gesendet wird.

4. Vorrichtung nach Anspruch 1, wobei die Vorrichtung veranlasst wird, die Kanaldetektion durch Folgendes durchzuführen:
Detektieren, ob jeder der Vielzahl von unterstützten Kanälen frei ist.

5. Vorrichtung nach Anspruch 1, wobei die Vorrichtung veranlasst wird, die Kanaldetektion durch Folgendes durchzuführen:
Detektieren des ersten Kanals in einer ersten Zeitperiode; und
Detektieren von mindestens einem anderen zweiten Kanal der Vielzahl von unterstützten Kanälen in einer nachfolgenden zweiten Zeitperiode.

6. Vorrichtung nach Anspruch 1, wobei die Vielzahl von unterstützten Kanälen auf einem Unterband betrieben wird und die Vorrichtung veranlasst wird, die Kanaldetektion durch Folgendes durchzuführen:
Detektieren der Vielzahl von unterstützten Kanälen via eine Empfangskette.

7. Vorrichtung nach Anspruch 1, wobei die Vielzahl von unterstützten Kanälen auf einer Vielzahl von Unterbändern betrieben wird und der erste Kanal auf einem ersten Unterband der Vielzahl von Unterbändern betrieben wird und die Vorrichtung veranlasst wird, die Kanaldetektion durch Folgendes durchzuführen:
Detektieren des ersten Kanals via eine Empfangskette; und
Detektieren von mindestens einem zweiten Kanal der Vielzahl von unterstützten Kanälen, die auf einem anderen zweiten Unterband der Vielzahl von Unterbändern betrieben werden, via eine separate Empfangskette.

8. Vorrichtung nach Anspruch 7, wobei die Vorrichtung veranlasst wird, mindestens den zweiten Kanal durch Folgendes zu detektieren:
Detektieren des zweiten Kanals und eines dritten Kanals der Vielzahl von unterstützten Kanälen, die auf einem dritten Unterband der Vielzahl von Unterbändern betrieben werden, via eine separate Empfangskette durch Scannen des zweiten und des dritten Unterbands in einem Round-Robin-Modus, wobei sich das dritte Unterband vom ersten und vom zweiten Unterband unterscheidet.

9. Vorrichtung nach Anspruch 1, wobei die Vorrichtung ferner zu Folgendem veranlasst wird:
Bestimmen eines Kanals der Vielzahl von unterstützten Kanälen zum Übertragen des Signals auf Basis der Kanaldetektion.

10. Vorrichtung nach Anspruch 1, wobei die Vielzahl von unterstützten Kanälen in einem nicht lizenzierten Spektrum betrieben wird.

11. Verfahren (500), das von einer Vorrichtung (500) durchgeführt wird und Folgendes umfasst:
Bestimmen (505), dass ein Signal auf einem ersten Kanal einer Vielzahl von unterstützten Kanälen (46A, 46B, 46C, 46D) zu übertragen ist; und
in Reaktion auf die Bestimmung Durchführen (510) einer Kanaldetektion für die Vielzahl von unterstützten Kanälen (46A, 46B, 46C, 46D), um das Signal zu übertragen;
Senden (515) einer Vielzahl von Anzeigen, um ein Ergebnis der Kanaldetektion für eine Steuereinheit in einem Satz von Steuereinheiten einer Netzwerkvorrichtung anzuzeigen;
Empfangen eines Satzes von Anforderungen vom Satz von Steuereinheiten der Netzwerkvorrichtung für eine Signalübertragung auf dem Satz von Kanälen der Vielzahl von unterstützten Kanälen, wobei der Satz von Kanälen den ersten Kanal beinhaltet; und
Bestimmen in Reaktion auf den Satz von Anforderungen vom Satz von Steuereinheiten, dass das Signal auf dem ersten Kanal zu übertragen ist, wobei die Vorrichtung eine Funkeinheit der Netzwerkvorrichtung umfasst.

12. Computerlesbares Speichermedium, das darauf gespeicherte Programmanweisungen umfasst, wobei die Anweisungen, wenn sie von einem Prozessor einer Vorrichtung ausgeführt werden, die Vorrichtung veranlassen, das Verfahren nach Anspruch 11 durchzuführen.

## Revendications

1. Dispositif (800) comprenant :
au moins un processeur (810) ; et
au moins une mémoire (820) comportant un code de programme informatique (840) ;
l'au moins une mémoire (820) et le code de programme informatique (840) étant configurés pour, avec l'au moins un processeur (810), amener le dispositif (800) à :
déterminer (505) qu'un signal doit être transmis sur un premier canal d'une pluralité de canaux (46A, 46B, 46C, 46D) pris en charge ; et
en réponse à la détermination, réaliser (510) une détection de canal pour la pluralité de canaux (46A, 46B, 46C, 46D) pris en charge pour transmettre le signal ;
envoyer (515) une pluralité d'indications pour indiquer un résultat de la détection de canal à une unité de commande d'un ensemble d'unités de commande d'un dispositif réseau ;
dans lequel le dispositif comprend une unité radio du dispositif réseau, et l'unité radio est en outre amenée à :
recevoir un ensemble de demandes en provenance de l'ensemble d'unités de commande du dispositif réseau pour une transmission de signal sur un ensemble de canaux de la pluralité de canaux pris en charge, l'ensemble de canaux comportant le premier canal ; et
en réponse à l'ensemble de demandes de l'ensemble d'unités de commande, déterminer que le signal doit être transmis sur le premier canal.

2. Dispositif selon la revendication 1, dans lequel l'unité radio est amenée à envoyer la pluralité d'indications :
en envoyant la pluralité d'indications dans un message à l'unité de commande de l'ensemble d'unités de commande du dispositif réseau.

3. Dispositif selon la revendication 2, dans lequel le dispositif est configuré pour fonctionner conformément à une fonctionnalité "Écouter avant de parler", LBT, dans lequel une demande de l'ensemble de demandes est reçue par l'unité radio dans un message LBT_DL_CONFIG_ REQUEST de la fonctionnalité LBT, et le résultat est envoyé par l'unité radio dans un message LBT_DL_INDICATION de la fonctionnalité LBT.

4. Dispositif selon la revendication 1, dans lequel le dispositif est amené à réaliser la détection de canal :
en détectant si chacun de la pluralité de canaux pris en charge est libre.

5. Dispositif selon la revendication 1, dans lequel le dispositif est amené à réaliser la détection de canal :
en détectant le premier canal dans une première période de temps ; et
en détectant au moins un deuxième canal de la pluralité de canaux pris en charge différent dans une deuxième période de temps ultérieure.

6. Dispositif selon la revendication 1, dans lequel la pluralité de canaux pris en charge fonctionne sur une sous-bande, et le dispositif est amené à réaliser la détection de canal :
en détectant la pluralité de canaux pris en charge via une chaîne de réception.

7. Dispositif selon la revendication 1, dans lequel la pluralité de canaux pris en charge fonctionne sur une pluralité de sous-bandes, et le premier canal fonctionne sur une première sous-bande de la pluralité de sous-bandes, et le dispositif est amené à réaliser la détection de canal :
en détectant le premier canal via une chaîne de réception ; et
en détectant au moins un deuxième canal de la pluralité de canaux pris en charge fonctionnant sur une deuxième sous-bande de la pluralité de sous-bandes différente via une chaîne de réception séparée.

8. Dispositif selon la revendication 7, dans lequel le dispositif est amené à détecter au moins le deuxième canal :
en détectant le deuxième canal et un troisième canal de la pluralité de canaux pris en charge fonctionnant sur une troisième sous-bande de la pluralité de sous-bandes via la chaîne de réception séparée en balayant les deuxième et troisième sous-bandes dans un mode circulaire, la troisième sous-bande étant différente des première et deuxième sous-bandes.

9. Dispositif selon la revendication 1, dans lequel le dispositif est en outre amenée à :
déterminer, sur la base de la détection de canal, un canal de la pluralité de canaux pris en charge pour transmettre le signal.

10. Dispositif selon la revendication 1, dans lequel la pluralité de canaux pris en charge fonctionne dans un spectre sans licence.

11. Procédé (500) réalisé par un dispositif (500) comprenant les étapes suivantes :
déterminer (505) qu'un signal doit être transmis sur un premier canal d'une pluralité de canaux (46A, 46B, 46C, 46D) pris en charge ; et
en réponse à la détermination, réaliser (510) une détection de canal pour la pluralité de canaux (46A, 46B, 46C, 46D) pris en charge pour transmettre le signal ;
envoyer (515) une pluralité d'indications pour indiquer un résultat de la détection de canal à une unité de commande d'un ensemble d'unités de commande d'un dispositif réseau ;
recevoir un ensemble de demandes en provenance de l'ensemble d'unités de commande du dispositif réseau pour une transmission de signal sur un ensemble de canaux de la pluralité de canaux pris en charge, l'ensemble de canaux comportant le premier canal ; et
en réponse à l'ensemble de demandes de l'ensemble d'unités de commande, déterminer que le signal doit être transmis sur le premier canal, dans lequel le dispositif comprend une unité radio du dispositif réseau.

12. Support de stockage lisible par ordinateur sur lequel sont stockées de instructions de programme, les instructions, lorsqu'elles sont exécutées par un processeur d'un dispositif, amenant le dispositif à réaliser le procédé selon la revendication 11.
